# EUROPÄISCHE PATENTSCHRIFT

(11) **EP 2 356 321 B1**
(45) Veröffentlichungstag und Bekanntmachung des Hinweises auf die Patenterteilung: **19.10.2016**
(21) Anmeldenummer: 09799508.8
(22) Anmeldetag: 02.12.2009
(51) Int. Cl.: F01D 5/14, F01D 9/04

(54) **STRÖMUNGSMASCHINE**
TURBO ENGINE
TURBOMACHINE

(30) Priorität: 06.12.2008 DE 102008060847
(43) Veröffentlichungstag der Anmeldung: 17.08.2011
(73) Patentinhaber: MTU Aero Engines AG, 80995 München (DE)
(72) Erfinder: HOEGER, Martin, 85435 Erding (DE); MALZACHER, Franz, 82194 Gröbenzell (DE); NAGEL, Marc, 82515 Wolfratshausen (DE)
(86) Internationale Anmeldenummer: PCT/DE2009/001699
(87) Internationale Veröffentlichungsnummer: WO 2010/063271

(56) Entgegenhaltungen:
- EP-A2- 1 632 648
- EP-A2- 1 731 734
- EP-B1- 0 798 447
- DE-T2- 60 313 979
- US-A- 6 036 438

## Beschreibung

Die Erfindung betrifft eine Strömungsmaschine, insbesondere ein Gasturbinenflugtriebwerk, nach dem Oberbegriff des Anspruchs 1, wie beispielsweise in der Druckschrift EP 1 632 648 A2 offenbart ist.

In der Druckschrift EP 0 798 447 A2 wird ein Schaufelblatt für Strömungsmaschinen angegeben, deren Profilschnitte zur Anpassung an die radial veränderlichen Strömungswinkel und -zustände unterschiedlich ausgebildet sind. Hierzu wird vorgeschlagen, die randnahen Profilschnitte durch Vergrößerung des Vorderkantenradiuses, des Keilwinkels und/oder der absoluten Profildicke mit einer strömungsmochanisch gestalteten Aufdickung zu versehen.

Ein mehrwelliges Gasturbinenflugtriebwerk verfügt über mehrere Verdichterkomponenten, mindestens eine Brennkammer und mehrere Turbinenkomponenten. So verfügt ein zweiwelliges Gasturbinenflugtriebwerk über einen Niederdruckverdichter, einen Hochdruckverdichter, mindestens eine Brennkammer, eine Hochdruckturbine sowie eine Niederdruckturbine. Ein dreiwelliges Gasturbinenflugtriebwerk verfügt über einen Niederdruckverdichter, einen Mitteldruckverdichter, einen Hochdruckverdichter, mindestens eine Brennkammer, eine Hochdruckturbine, eine Mitteldruckturbine und eine Niederdruckturbine.

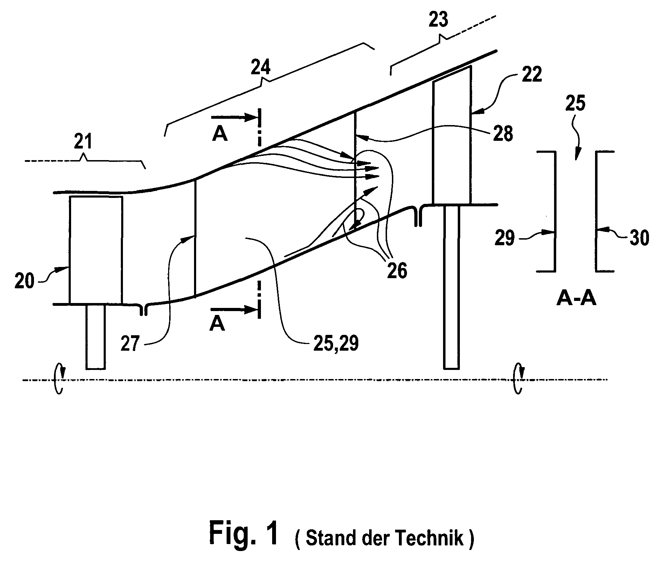

Fig. 1 zeigt einen stark schematisierten Ausschnitt aus einem aus dem Stand der Technik bekannten, mehrwelligen Gasturbinenflugtriebwerk im Bereich eines Rotors 20 einer Hochdruckturbine 21 sowie eines Rotors 22 einer Niederdruckturbine 23. Zwischen der Hochdruckturbine 21 und der Niederdruckturbine 23 erstreckt sich ein Strömungskanal 24, um die Strömung, welche die Hochdruckturbine 21 verlässt, der Niederdruckturbine 23 zuzuführen, wobei im Strömungskanal 24 mindestens eine Stützrippe 25 positioniert ist. Bei der Stützrippe 25 handelt es sich um ein statorseitiges Bauteil, welches die den Strömungkanal 24 durchströmende Strömung umlenkt. Eine solche strömungsumlenkende Stützrippe 25 verfügt über eine Vorderkante 27, die auch als Strömungseintrittskante bezeichnet wird, über eine Hinterkante 28, die auch als Strömungsaustrittskante bezeichnet wird, über eine Saugseite sowie über eine Druckseite. Die Strömung auf der Saugseite der strömungsumlenkenden Stützrippe 25 ist in Fig. 1 durch Pfeile 26 verdeutlicht. Eine solche Stützrippe 25 der ist typischerweise als Hohlrippe ausgeführt, wobei in einem Innenraum bzw. Hohlraum der Stützrippe 25 ein vorzugsweise zylindrisches Führungselement typischerweise in Radialrichtung verläuft, um z. B. Versorgungsleitungen von radial innen nach radial außen oder umgekehrt von radial außen nach radial innen zu führen. In Fig. 1 ist weiterhin auf der rechten Seite ein Schnitt durch die Stützrippe 25 entlang der Schnittrichtung A-A gezeigt, wobei Fig. 1 entnommen werden kann, dass bei aus dem Stand der Technik bekannten Strömungsmaschinen eine solche Stützrippe 25 im Bereich der Saugseite 29 sowie im Bereich der Druckseite 30 derart konturiert ist, dass dieselbe in Radialrichtung gesehen eine näherungsweise unveränderliche Dicke aufweist.

Bei der in Fig. 1 im Ausschnitt gezeigten, aus dem Stand der Technik bekannten Strömungsmaschine treten im Bereich der Stützrippen 25 starke dreidimensionale Strömungseffekte (siehe Pfeile 26) auf, die zu erheblichen Strömungsverlusten führen können. Es besteht Bedarf an einer Strömungsmaschine, bei welcher eine ausgeglichenere Strömung und geringere Strömungsverluste auftreten.

Hiervon ausgehend liegt der vorliegenden Erfindung das Problem zu Grunde, eine neuartige Strömungsmaschine, insbesondere ein Gasturbinenflugtriebwerk, mit geringeren Strömungsverlusten zu schaffen.

Dieses Problem wird durch eine Strömungsmaschine gemäß Anspruch 1 gelöst. Erfindungsgemäß umfasst die Strömungsmaschine zumindest folgende Merkmale: a) die Saugseite der oder jeder Stützrippe ist derart konturiert, dass in Radialrichtung gesehen eine Dicke der jeweiligen Stützrippe in Richtung auf eine radial innen liegende Begrenzungswand des Strömungskanals sowie in Richtung auf eine radial außen liegende Begrenzungswand des Strömungskanals vergrößert ist bzw. zunimmt; b) die Druckseite der oder jeder Stützrippe ist derart konturiert, dass in Radialrichtung gesehen die Dicke der jeweiligen Stützrippe zumindest unmittelbar im Bereich der radial innen liegenden Begrenzungswand des Strömungskanals sowie unmittelbar im Bereich der radial außen liegenden Begrenzungswand des Strömungskanals vergrößert ist bzw. zunimmt; c) die Vorderkante und die Hinterkante der oder jeder Stützrippe sind in Meridianrichtung geneigt. Erfingdungsgemäß ist die Stützrippe an der Vorderkante bzw. der Strömungseintrittskante derart konturiert, dass die Vorderkante in Richtung auf die radial innen liegende Begrenzungswand des Strömungskanals sowie in Richtung auf die radial außen liegende Begrenzungswand des Strömungskanals jeweils eine Rückwärtspfeilung aufweist, dass also die Vorderkante in diesen Richtungen gesehen jeweils stromabwärts in Strömungsrichtung versetzt ist.

Bei der erfindungsgemäßen Strömungsmaschine können durch das spezielle Design der oder jeder strömungsumlenkenden Stützrippe, die in einem Strömungskanal zwischen zwei Turbinen positioniert ist, Strömungsverluste erheblich reduzieren, nämlich in einer Größenordnung zwischen 20% und 40%.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: einen stark schematisierten, ausschnittsweisen Längsschnitt durch eine aus dem Stand der Technik bekannte Strömungsmaschine;
- Fig. 2: einen stark schematisierten, ausschnittsweisen Längsschnitt durch eine erfindungsgemäße Strömungsmaschine;
- Fig. 3: ein vergrößertes Detail der Fig. 2;
- Fig. 4: eine erste Zwischendesignstufe einer Stützrippe zur weiteren Verdeutlichung der Erfindung;
- Fig. 5: eine zweite Zwischendesignstufe einer Stützrippe zur weiteren Verdeutlichung der Erfindung;
- Fig. 6: eine dritte Zwischendesignstufe einer Stützrippe zur weiteren Verdeutlichung der Erfindung;
- Fig. 7: ein Detail zur dritten Zwischendesignstufe der Fig. 6;
- Fig. 8: ein weiteres Detail zur dritten Zwischendesignstufe der Fig. 6;
- Fig. 9: ein erstes Diagramm zur weiteren Verdeutlichung der Erfindung;
- Fig. 10: ein zweites Diagramm zur weiteren Verdeutlichung der Erfindung;
- Fig. 11: ein drittes Diagramm zur weiteren Verdeutlichung der Erfindung; und
- Fig. 12: ein viertes Diagramm zur weiteren Verdeutlichung der Erfindung.

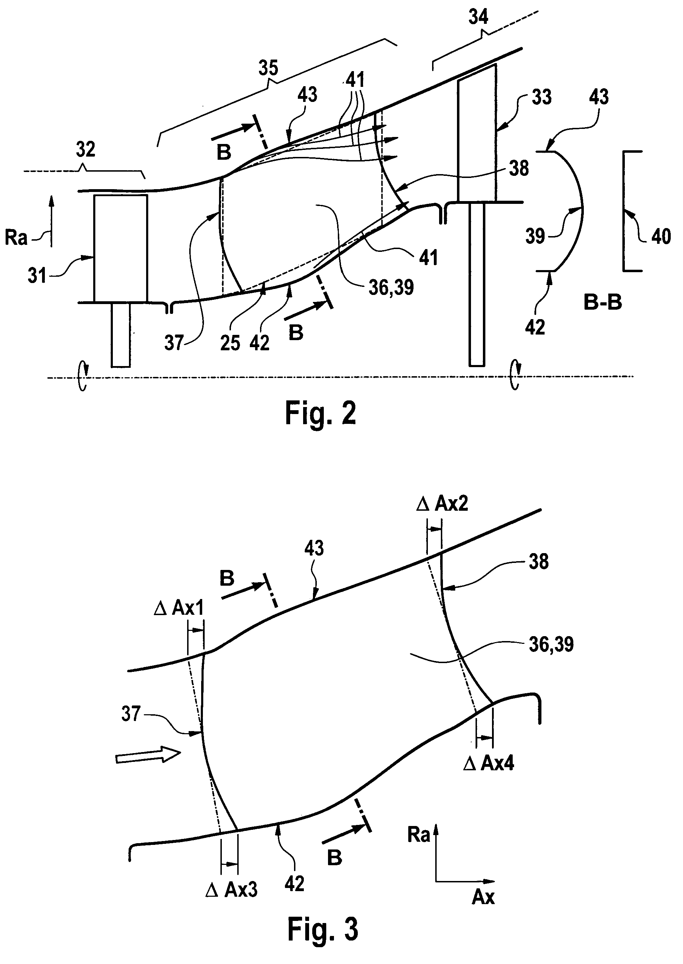

Fig. 2 zeigt einen schematisierten Ausschnitt aus einer erfindungsgemäßen Strömungsmaschine im Bereich eines Rotors 31 einer Hochdruckturbine 32 sowie eines Rotors 33 einer Niederdruckturbine 34, wobei sich gemäß Fig. 2 zwischen der Hochdruckturbine 32 und der Niederdruckturbine 34 ein Strömungskanal 35 erstreckt, durch den die Strömung geleitet wird, welche die Hochdruckturbine 32 verlässt und der Niederdruckturbine 34 zugeführt werden soll. Im Strömungskanal 35 ist mindestens eine Stützrippe 36 positioniert, welche die den Strömungskanal 35 durchströmende Strömung umlenkt, wobei die Stützrippe 36 hierzu eine Vorderkante 37, die auch als Strömungseintrittskante bezeichnet wird, eine Hinterkante 38, die auch als Strömungsaustrittskante bezeichnet wird, eine Saugseite 39 sowie eine Druckseite 40 umfasst. Eine Strömung um die Saugseite 39 der Stützrippe 36 herum ist in Fig. 2 durch Pfeile 41 visualisiert.

Die hier vorliegende Erfindung betrifft nun Details der oder jeder im Strömungskanal 35 positionierten Stützrippe 36, und zwar solche Details, mit Hilfe derer Strömungsverluste im Bereich des Strömungskanals 35 reduziert werden können. In Fig. 2 ist zur Verdeutlichung der Erfindung neben der erfindungsgemäß ausgestalteten Stützrippe 36 weiterhin die aus Fig. 1 bekannte, aus dem Stand der Technik bekannte Stützrippe 25 gestrichelt eingezeichnet.

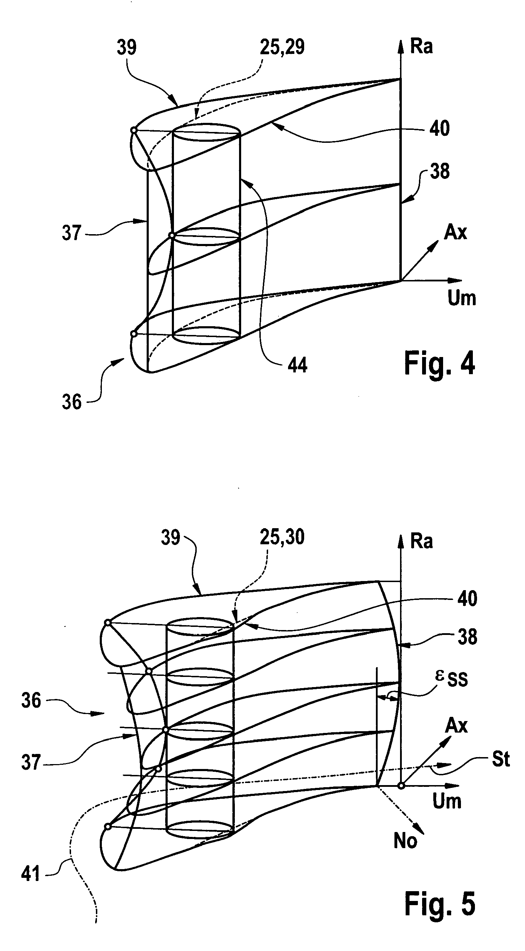

Wie insbesondere dem Schnitt B-B der Fig. 2 sowie Fig. 4 entnommen werden kann, ist die Saugseite 39 der Stützrippe 36 derart konturiert, dass in Radialrichtung Ra gesehen eine Dicke der Stützrippe 36 in Richtung auf eine radial innen liegende Begrenzungswand 42 sowie in Richtung auf eine radial außen liegende Begrenzungswand 43 des Strömungskanals 35 vergrößert ist bzw. zunimmt.

So kann der Schnittdarstellung B-B durch die Stützrippe 36 der Fig. 2 entnommen werden, dass die Stützrippe 36 im Bereich der Saugseite 39 konkav gekrümmt ist, wobei die Dicke derselben ausgehend von einem in Radialrichtung Ra gesehen mittleren Abschnitt in Richtung auf die radial innen liegende Begrenzungswand 42 sowie in Richtung auf die radial außen liegende Begrenzungswand 43 kontinuierlich zunimmt.

In Fig. 4 ist neben der Radialrichtung Ra auch die Axialrichtung Ax und die Umfangsrichtung Um gezeigt. Weiterhin visualisiert Fig. 4, dass die Stützrippe 36 als Hohlrippe ausgeführt ist, in deren Innenraum ein sich in Radialrichtung Ra erstreckendes, vorzugsweise zylindrisches Führungselement 44 erstreckt, durch welches z. B. Versorgungsleitungen von radial innen nach radial außen sowie umgekehrt von radial außen nach radial innen unter Überbrückung des Strömungskanals 35 geführt werden können.

Gestrichelt ist in Fig. 4 die Konturierung der Saugseite 29 der aus dem Stand der Technik bekannten Stützrippe 25 gezeigt, wobei aus Fig. 4 folgt, dass durch die Aufweitung der Dicke der Saugseite 39 der zur Aufnahme des Führungselements 44 zur Verfügung stehende Innenraum der Stützrippe 36 prinzipiell vergrößert wird.

Im Bereich der Druckseite 40 der Stützrippe 36 ist dieselbe, wie Fig. 5 entnommen werden kann, derart konturiert, dass in Radialrichtung Ra gesehen die Dicke der Stützrippe 36 zumindest unmittelbar im Bereich der radial innen liegenden Begrenzungswand 42 sowie unmittelbar im Bereich der radial außen liegenden Begrenzungswand 43 vergrößert ist bzw. zunimmt, wodurch der zur Aufnahme des Führungselements 44 zur Verfügung stehende Innenraum der Stützrippe 36 auch im Bereich der Druckseite 40 vergrößert wird, so dass es dann möglich ist, die Hinterkante 38 bzw. Strömungsaustrittskante der Stützrippe 36 in Umfangsrichtung Um zu neigen.

In unmittelbarer Nähe der radial innen liegenden Begrenzungswand 42 des Strömungskanals 35 sowie in unmittelbarer Nähe der radial außen liegenden Begrenzungswand 43 des Strömungskanals 35 ist demnach die Dicke der Stützrippe im Bereich der Druckseite 40 erhöht.

Hierdurch ist es dann möglich, radial außen liegende Schnitte sowie radial innen liegende Schnitte durch die Stützrippe 36 in Umfangsrichtung zu verschieben, wodurch dann die Hinterkante 38 sowie die Vorderkante 37 der Stützrippe 36 in Umfangsrichtung geneigt werden.

In Fig. 5 ist zusätzlich zu der Radialrichtung Ra, der Axialrichtung Ax und der Umfangsrichtung Um weiterhin eine Strömungsrichtung St sowie eine Normalrichtung No zur Strömungsrichtung St eingezeichnet, wobei ein Winkel zwischen der radial innen liegenden bzw. nabenseitigen Begrenzungswand 42 des Strömungskanals 35 und der Saugseite 39 der Stützrippe 36 um die Strömungsrichtung St herum gesehen im Bereich der Hinterkante 38 in Fig. 5 mit ε_{SS} gekennzeichnet ist. Dieser Winkel wird auch als Saugseiten-Eckenwinkel bezeichnet, wobei durch die Aufdickung der Druckseite 40 der Stützrippe 36 und die Verschiebung der radial außen liegenden und radial innen liegenden Schnitte derselben in Umfangsrichtung dieser Saugseiten-Eckenwinkel ε_{SS} vergrößert werden kann. Fig. 5 zeigt den vereinfachten Fall eines Strömungskanals mit zylindrischen Seitenwänden.

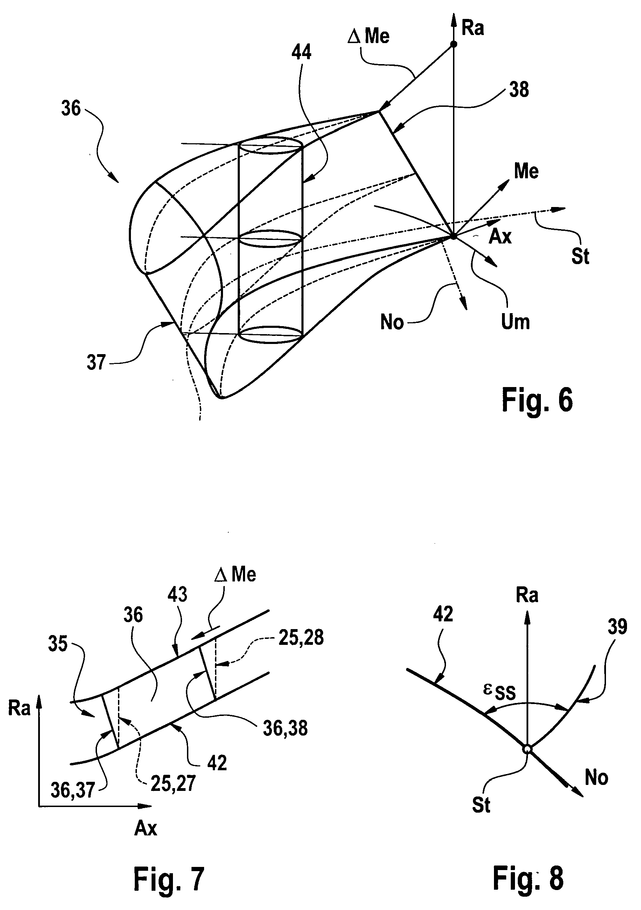

Fig. 6 zeigt den Fall eines Strömungskanals bzw. Ringraums mit ansteigenden Seitenwänden. Hier sind die Vorderkante 37 sowie die Hinterkante 38 der Stützrippe 36, wie Fig. 6 entnommen werden kann, in Meridianrichtung Me geneigt. So ist in Fig. 6 zusätzlich die Meridianrichtung Me eingezeichnet, wobei die Neigung der der Hinterkante 38 der Stützrippe 36 in Meridianrichtung Me in Fig. 6 durch den Versatz ΔMe visualisiert ist. Die konventionelle Bauart ist in Fig. 7 mit gestrichelter Linienführung für Vorderkante und Hinterkante gezeigt. Durch die Neigung von Vorderkante 37 und Hinterkante 38 in Meridianrichtung Me kann der Saugseiten-Eckenwinkel ε_{SS} abermals vergrößert werden, wodurch die Strömungsverhältnisse weiter optimiert werden können. Der Saugseiten-Eckenwinkel ε_{SS} im Bereich der Hinterkante 38 der Stützrippe 36 beträgt mehr als 80°, insbesondere mehr als 90°.

Trotz der im Zusammenhang mit Fig. 5 beschriebenen Umfangsneigung und der im Zusammenhang mit Fig. 6 beschriebenen Meridianneigung kann nach wie vor das Stützelement 44 in Radialrichtung Ra im Innenraum der Stützrippe 36 geführt werden.

Nach einer vorteilhaften Weiterbildung der hier vorliegenden Erfindung ist die radial innen liegende Begrenzungswand 42 des Strömungskanals 35 nach radial innen und die radial außen liegende Begrenzungswand 43 des Strömungskanals 35 nach radial außen gebogen, nämlich derart, dass eine durch diese Konturierung der Begrenzungswände 42, 43 bewirkte Aufweitung des Strömungskanals 35 eine durch die Dickenaufweitung der Stützrippe 36 im Bereich der Saugseite bedingte Versperrung des Strömungskanals 35 ausgleicht. Insbesondere gleicht diese Konturierung der Begrenzungswände 42, 43 zusätzlich die durch die Dickenaufweitung der Stützrippe 36 im Bereich der Druckseite 40 bedingte Versperrung des Strömungskanals 35 aus.

Diese nach radial innen gebogene Konturierung der radial innen liegenden Begrenzungswand 42 des Strömungskanals 35 und die nach radial außen gebogene Konturierung der radial außen liegenden Begrenzungswand 43 des Strömungskanals 35 kann Fig. 2 und 3 entnommen werden.

Der Versatz der Vorderkante 37 im Bereich der radial außen liegenden Begrenzungswand 43 ist in Fig. 3 durch das Maß DAx1 gekennzeichnet. Der Versatz der Vorderkante 37 im Bereich der radial innen liegenden Begrenzungswand 42 ist in Fig. 3 durch ΔAx3 gekennzeichnet. Diese beiden Versätze können gleich groß oder auch unterschiedlich groß sein.

Ebenso ist gemäß Fig. 3 die Stützrippe 36 im Bereich der Hinterkante 38 mit einer Rückwärtspfeilung konturiert, und zwar derart, dass sowohl in Richtung auf die radial innen liegende Begrenzungswand 42 als auch in Richtung auf die radial außen liegende Begrenzungswand 43 die Hinterkante 38 eine Rückwartspfeilung aufweist und demnach dieselbe in Strömungsrichtung gesehen stromabwärts versetzt ist. Der Versatz der Hinterkante 38 im Bereich der radial außen liegenden Begrenzungswand 43 ist in Fig. 3 durch das Maß ΔAx2 gekennzeichnet, das Maß ΔAx4 visualisiert den Versatz der Hinterkante 38 im Bereich der radial innen liegenden Begrenzungswand 42. Diese beiden Versätze können gleich groß oder auch unterschiedlich groß sein.

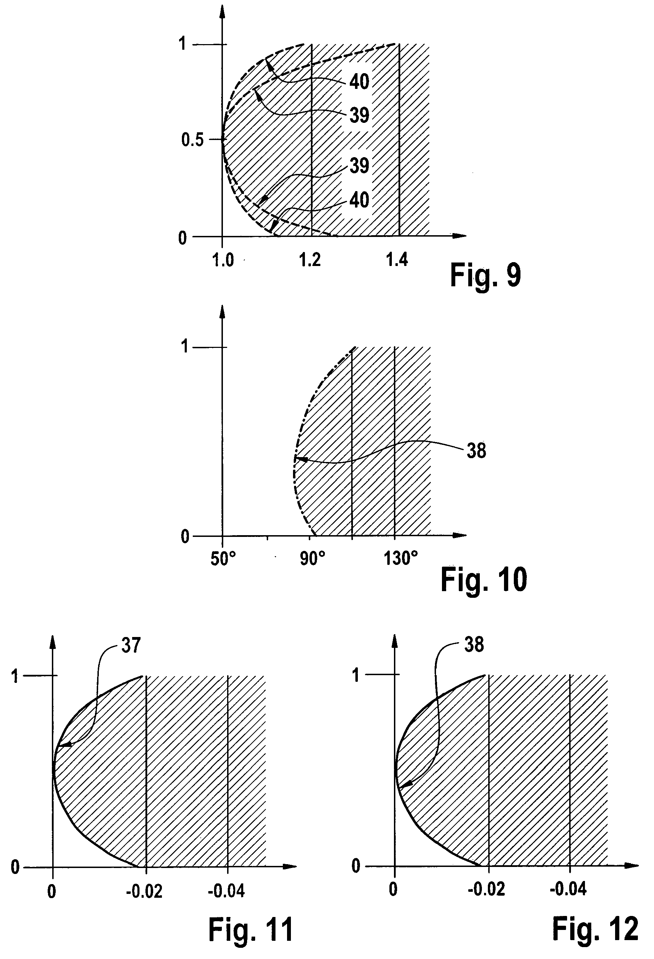

Weitere bevorzugte Details der erfindungsgemäßen Strömungsmaschine, nämlich Details für die Ausgestaltung der Stützrippe 36, ergeben sich aus Fig. 9 bis 12. So ist in den Fig. 9 bis 12 auf der vertikal verlaufenden Achse jeweils die relative Höhe des Strömungskanals 35 aufgetragen. Auf der relativen Höhe 0 des Strömungskanals liegt demnach jeweils die radial innen liegende Begrenzungswand 42 des Strömungskanals, auf der relativen Höhe 1 desselben liegt jeweils die radial außen liegende Begrenzungswand 43.

In Fig. 9 ist auf der horizontal verlaufenden Achse eine relative Dicke der Stützrippe 36 im Bereich der Saugseite 39 bzw. im Bereich der Druckseite 40 aufgetragen, und zwar derart, dass im Bereich eines Mittelschnitts durch die Stützrippe 36 die relative Dicke 1 beträgt.

Ausgehend von diesem Mittelschnitt, der bei einer relativen Höhe des Strömungskanals von in etwa 0,5 liegt, nimmt die relative Dicke der Stützrippe 36 im Bereich der Saugseite 39 und im Bereich der Druckseite 40 zu. Dabei zeigt Fig. 9, dass die Stützrippe 36 im Bereich der radial außen liegenden Seitenwand sowie im Bereich der Saugseite 39 die größte relative Dickenzunahme von in etwa 40% aufweist. Im Bereich der radial innen liegenden Begrenzungswand beträgt die relative Dickenzunahme an der Saugseite 39 gemäß Fig. 9 in etwa 25%. Die relative Dickenzunahme der Druckseite 40 im Bereich der radial außen liegenden Begrenzungswand des Strömungskanals 35 beträgt gemäß Fig. 9 in etwa 10%, im Bereich der radial innen liegenden Begrenzungswand beträgt diese relative Dickenzunahme der Druckseite 40 in etwa 5%.

In Fig. 10 ist auf der horizontal verlaufenden Achse der Saugseiten-Eckenwinkel im Bereich der Hinterkante 38 der Stützrippe 36 aufgetragen, wobei, wie Fig. 10 entnommen werden kann, der Saugseiten-Eckenwinkel der Hinterkante 38 im Bereich der radial innen liegenden Begrenzungswand 42 des Strömungskanals 35 in etwa 90° und im Bereich der radial außen liegenden Begrenzungswand 43 des Strömungskanals 35 in etwa 110° beträgt. Über die gesamte Hinterkante 38 gesehen ist der Saugseiten-Eckenwinkel stets größer als 80°.

In Fig. 11 und 12 ist auf der horizontal verlaufenden Achse jeweils ein stromabwärtiger Versatz der Vorderkante 37 bzw. Hinterkante 38 bezogen auf die axiale Erstreckung der Stützrippe 36 aufgetragen, wobei, wie Fig. 11 und 12 entnommen werden kann, sowohl im Bereich der Vorderkante 37 als auch im Bereich der Hinterkante 38 der stromabwärtige Versatz bezogen auf die axiale Erstreckung der Stützrippe 36 sowohl im Bereich der radial innen liegenden Begrenzungswand 42 als auch im Bereich der radial außen liegenden Begrenzungswand 43 jeweils mehr als 1%, vorzugsweise in etwa 2%, beträgt.

Durch das spezielle Design der Stützrippe 36, die in dem Strömungskanal 35 zwischen zwei Turbinen positioniert ist, können Strömungsverluste erheblich reduziert werden.

Dabei verbessert sich sowohl die Strömung um die Stutzrippen 36 herum, als auch die Anströmung einer in Strömungsrichtung gesehen stromabwärts der Stützrippen 36 positionierten Schaufelreihe der Turbine 34.

## Patentansprüche

1. Strömungsmaschine, insbesondere Gasturbinenflugtriebwerk, mit mehreren Verdichterkomponenten, mindestens einer Brennkammer und mehreren Turbinenkomponenten, wobei in einem Strömungskanal (35) zwischen zwei hintereinander geschalteten Turbinenkomponenten (32, 34) mindestens eine Stützrippe (36) positioniert ist, wobei die oder jede Stützrippe eine Saugseite (39), eine Druckseite (40), eine Vorderkante (37) und eine Hinterkante (38) aufweist, wobei die oder jede Stützrippe eine den Strömungskanal durchströmende Strömung umlenkt, wobei in einem Innenraum der oder jeder Stützrippe ein vorzugsweise zylindrisches Führungselement (44) verläuft, und wobei die Vorderkante und die Hinterkante der oder jeder Stützrippe in Meridianrichtung geneigt sind,
**dadurch gekennzeichnet, dass**
a) die Saugseite (39) der oder jeder Stützrippe (36) derart konturiert ist, dass in Radialrichtung gesehen eine Dicke der jeweiligen Stützrippe (36) in Richtung auf eine radial innen liegende Begrenzungswand (42) des Strömungskanals (35) sowie in Richtung auf eine radial außen liegende Begrenzungswand (43) des Strömungskanals (35) vergrößert ist bzw. zunimmt;
b) die Druckseite (40) der oder jeder Stützrippe (36) derart konturiert ist, dass in Radialrichtung gesehen die Dicke der jeweiligen Stützrippe (36) zumindest unmittelbar im Bereich der radial innen liegenden Begrenzungswand (42) des Strömungskanals (35) sowie unmittelbar im Bereich der radial außen liegenden Begrenzungswand (43) des Strömungskanals (35) vergrößert ist bzw. zunimmt;
c) die oder jede Stützrippe (36) an der Vorderkante (37) derart konturiert ist, dass die Vorderkante (37) in Richtung auf die radial innen liegende Begrenzungswand (42) des Strömungskanals sowie in Richtung auf die radial außen liegende Begrenzungswand (43) des Strömungskanals eine Rückwärtspfeilung aufweist und damit in Strömungsrichtung gesehen stromabwärts versetzt ist.

2. Strömungsmaschine nach Anspruch 1,
**dadurch gekennzeichnet, dass**
die oder jede Stützrippe (36) an der Saugseite (39) derselben in Radialrichtung konkav gekrümmt ist.

3. Strömungsmaschine nach Anspruch 1 oder 2,
**dadurch gekennzeichnet, dass**
die radial innen liegende Begrenzungswand (42) des Strömungskanals nach radial innen und die radial außen liegende Begrenzungswand (43) des Strömungskanals nach radial außen gebogen sind, nämlich derart, dass eine durch diese Konturierung der Begrenzungswände bewirkte Aufweitung des Strömungskanals (35) eine durch die Aufweitung der Stützrippe im Bereich der Saugseite (39) bedingte Versperrung des Strömungskanals (35) ausgleicht.

4. Strömungsmaschine nach Anspruch 3,
**dadurch gekennzeichnet, dass**
die durch diese Konturierung der Begrenzungswände (42, 43) bewirkte Aufweitung des Strömungskanals (35) zusätzlich die durch die Aufweitung der Stützrippe (36) im Bereich der Druckseite (40) bedingte Versperrung des Strömungskanals (35) ausgleicht.

5. Strömungsmaschine nach einem der Ansprüche 1 bis 4,
**dadurch gekennzeichnet, dass**
die Vorderkante (37) unmittelbar im Bereich der innen liegenden Begrenzungswand sowie unmittelbar im Bereich der radial außen liegenden Begrenzungswand derart stromabwärts versetzt ist, dass ein Verhältnis zwischen dem stromabwärtigen Versatz und der axialen Erstreckung der Stützrippe mehr als 1% beträgt.

6. Strömungsmaschine nach einem der Ansprüche 1 bis 5,
**dadurch gekennzeichnet, dass**
die oder jede Stützrippe (36) an der Hinterkante (38) derart konturiert ist, dass die Hinterkante (38) in Richtung auf die radial innen liegende Begrenzungswand (42) des Strömungskanals sowie in Richtung auf die radial außen liegende Begrenzungswand (43) des Strömungskanals eine Rückwärtspfeilung aufweist und damit in Strömungsrichtung gesehen stromabwärts versetzt ist.

7. Strömungsmaschine nach Anspruch 6,
**dadurch gekennzeichnet, dass**
die Hinterkante (38) unmittelbar im Bereich der innen liegenden Begrenzungswand sowie unmittelbar im Bereich der radial außen liegenden Begrenzungswand derart stromabwärts versetzt ist, dass ein Verhältnis zwischen dem stromabwärtigen Versatz und der axialen Erstreckung der Stützrippe mehr als 1% beträgt.

8. Strömungsmaschine nach einem der Ansprüche 1 bis 7,
**dadurch gekennzeichnet, dass**
die oder jede Stützrippe (36) an der Hinterkante (38) derart konturiert ist, dass dieselbe an einem radial innen liegenden Ende mit der radial innen liegende Begrenzungswand (42) des Strömungskanals und an einem radial außen liegenden Ende mit der radial außen liegende Begrenzungswand (43) des Strömungskanals jeweils einen Saugseiten-Eckenwinkel von größer als 80° einschließt.

9. Strömungsmaschine nach einem der Ansprüche 1 bis 8,
**dadurch gekennzeichnet, dass**
die oder jede strömungsumlenkende Stützrippe (36) an einer Hinterkante (38) bzw. Strömungsaustrittskante derart konturiert ist, dass die Hinterkante (38) weiterhin in Umfangsrichtung geneigt ist.

## Claims

1. A turbomachine, in particular an aero gas turbine engine, with several compressor components, at least one combustion chamber and several turbine components, whereby at least one reinforcement rib (36) is positioned in a flow path (35) between two turbine components (32, 34) connected in series, whereby the or each reinforcement rib has a suction side (39), a pressure side (40), a front edge (37) and a back edge (38), whereby the or each reinforcement rib diverts the flow travelling through the flow path, whereby a preferably cylindrical guiding element (44) runs through the inside of the or each reinforcement rib, and whereby the front edge and the back edge of the or each reinforcement rib are tilted in a meridian direction, **characterized in that**
a) the suction side (39) of the or each reinforcement rib (36) is contoured in such a way that, when viewed in a radial direction, the thickness of the relevant reinforcement rib (36) enlarges or increases towards an internal radial partitioning wall (42) of the flow path (35), as well as towards an external radial partitioning wall (43) of the flow path (35);
b) the pressure side (40) of the or each reinforcement rib (36) is contoured in such a way that, when viewed in a radial direction, the thickness of the relevant reinforcement rib (36) enlarges or increases at least directly in the area of the internal radial partitioning wall (42) of the flow path (35), as well as directly in the area of the external radial partitioning wall (43) of the flow path (35);
c) the front edge (37) of the or each reinforcement rib (36) is contoured in such a way that the front edge (37) has a backwards sweep towards the internal radial partitioning wall (42) of the flow path, as well as towards the external radial partitioning wall (43) of the flow path, and therefore, when viewed in the direction of flow, is offset downstream.

2. A turbomachine according to claim 1,
**characterized in that**
the or each reinforcement rib (36) is concavely curved in a radial direction on the suction side (39).

3. A turbomachine according to claim 1 or 2,
**characterized in that**
the internal radial partitioning wall (42) of the flow path is curved radially inwards and the external radial partitioning wall (43) is curved radially outwards, i.e. in such a way that the widening of the flow path (35) caused by the contour of this partitioning wall is cancelled out by the obstruction of the flow path (35) caused by the expansion of the reinforcement rib in the area of the suction side (39).

4. A turbomachine according to claim 3,
**characterized in that**
the widening of the flow path caused by the contouring of these partitioning walls (42,43) also cancels out the obstruction of the flow path (35) caused by the expansion of the reinforcement rib (36) in the area of the pressure side (40).

5. A turbomachine according to one of the claims 1 to 4,
**characterized in that**
the front edge (37) is offset downstream, directly in the area of the internal partitioning wall and directly in the area of the external radial partitioning wall, in such a way that the ratio between the downstream offset and the axial extension of the reinforcement rib is more than 1%.

6. A turbomachine according to one of the claims 1 to 5,
**characterized in that**
the back edge (38) of the or each reinforcement rib (36) is contoured in such a way that the back edge (38) has a backwards sweep towards the internal radial partitioning wall (42) of the flow path, as well as towards the external radial partitioning wall (43) of the flow path, and therefore, when viewed in the direction of flow, is offset downstream.

7. A turbomachine according to claim 6,
**characterized in that**
the back edge (38) is offset downstream, directly in the area of the internal partitioning wall and directly in the area of the external radial partitioning wall, in such a way that the ratio between the downstream offset and the axial extension of the reinforcement rib is more than 1%.

8. A turbomachine according to one of the claims 1 to 7,
**characterized in that**
the back edge (38) of the or each reinforcement rib (36) is contoured in such a way that the internal radial end with the internal radial partitioning wall (42) of the flow path and the external radial end with the external radial partitioning wall (43) each enclose a suction side corner angle of more than 80°.

9. A turbomachine according to one of the claims 1 to 8,
**characterized in that**
the back edge (38) or outflow edge of the reinforcement rib (36) is contoured in such a way that the back edge (38) is also tilted in a circumferential direction.

## Revendications

1. Turbomachine, en particulier moteur d'aéronef à turbine à gaz, comprenant une pluralité de composants de compresseur, au moins une chambre de combustion et une pluralité de composants de turbine, au moins une nervure de support (36) étant positionnée dans un conduit d'écoulement (35) entre deux composants de turbine (32, 34) montés l'un derrière l'autre, la ou chaque nervure de support (36) possédant un côté aspiration (39), un côté sous pression (40), un bord avant (37) et un bord arrière (38), la ou chaque nervure de support déviant un écoulement circulant à travers le conduit d'écoulement, un élément de guidage (44) de préférence cylindrique s'étendant dans un espace intérieur de la ou de chaque nervure de support, le bord avant et le bord arrière de la ou de chaque nervure de support étant inclinés dans la direction méridienne,
**caractérisée en ce que**
a) le côté aspiration (39) de la ou de chaque nervure de support (36) est profilée de telle manière que, par référence à la direction radiale, l'épaisseur de la nervure de support respective (36) augmente ou est agrandie en direction d'une paroi de délimitation radialement intérieure (42) du conduit d'écoulement (35) et en direction d'une paroi de délimitation radialement extérieure (43) du conduit d'écoulement (35) ;
b) le côté sous pression (40) de la ou de chaque nervure de support (36) est profilée de telle manière que, par référence à dans la direction radiale, l'épaisseur de la nervure de support respective (36) augmente ou est agrandie au moins directement dans la région de la paroi de délimitation radialement intérieure (42) du conduit d'écoulement (35) et directement dans la région de la paroi de délimitation radialement extérieure (43) du conduit d'écoulement (35) ;
c) la ou chaque nervure de support (36) sur le bord avant (37) est profilée de telle manière que le bord avant (37) présente un déport vers l'arrière en direction de la paroi de délimitation radialement intérieure (42) du conduit d'écoulement et en direction de la paroi de délimitation radialement extérieure (43) du conduit d'écoulement et est donc décalée vers l'aval par référence au sens d'écoulement.

2. Turbomachine selon la revendication 1, **caractérisée en ce que** la ou chaque nervure de support (36), du côté aspiration (39) de celle-ci, est incurvée concave dans la direction radiale.

3. Turbomachine selon la revendication 1 ou 2, **caractérisée en ce que** la paroi de délimitation radialement intérieure (42) du conduit d'écoulement est incurvée radialement vers l'intérieur et la paroi de délimitation radialement extérieure (43) du conduit d'écoulement sont incurvée radialement vers l'extérieur, c'est-à-dire de telle sorte qu'un élargissement du conduit d'écoulement (35), généré par ce profilage des parois de délimitation, compense une obstruction du conduit d'écoulement (35) induite par l'élargissement de la nervure de support dans la région du côté aspiration (39).

4. Turbomachine selon la revendication 3, **caractérisée en ce que** l'élargissement du conduit d'écoulement (35), généré par ce profilage des parois de délimitation (42, 43), compense en outre l'obstruction du conduit d'écoulement (35) induite par l'élargissement de la nervure de support (36) dans la région du côté sous pression (40).

5. Turbomachine selon l'une des revendications 1 à 4, **caractérisée en ce que** le bord avant (37) est décalé vers l'aval directement dans la région de la paroi de délimitation intérieure et directement dans la région de la paroi de délimitation radialement extérieure de telle que le rapport entre le décalage vers l'aval et l'extension axiale de la nervure de support est supérieure à 1%.

6. Turbomachine selon l'une des revendications 1 à 5, **caractérisée en ce que** la ou chaque nervure de support (36) est profilée au niveau du bord arrière (38) de telle sorte que le bord arrière (38) présente un déport vers l'aval en direction de la paroi de délimitation radialement intérieure (42) du conduit d'écoulement et en direction de la paroi de délimitation radialement extérieure (43) du conduit d'écoulement et est donc décalé par référence au sens d'écoulement.

7. Turbomachine selon la revendication 6, **caractérisée en ce que** le bord arrière (38) est décalée vers l'aval directement dans la région de la paroi de délimitation intérieure et directement dans la région de la paroi de délimitation radialement extérieure de telle sorte que le rapport entre le décalage vers l'aval et l'extension axiale de la nervure de support est supérieure à 1%.

8. Turbomachine selon l'une quelconque des revendications 1 à 7, **caractérisée en ce que** la ou chaque nervure de support (36) est profilée au niveau du bord arrière (38) de façon à former, avec la paroi de délimitation radialement intérieure (42) du conduit d'écoulement à une extrémité radialement intérieure et avec la paroi de délimitation radialement extérieure (43) du conduit d'écoulement à une extrémité radialement extérieure, un angle de coin côté aspiration de plus de 80°.

9. Turbomachine selon l'une des revendications 1 à 9, **caractérisée en ce que** la ou chaque nervure de support (36), déviant l'écoulement, est profilée au niveau d'un bord arrière (38) ou d'un bord de sortie d'écoulement de telle sorte que le bord arrière (38) est en outre inclinée dans la direction circonférentielle.
